# EUROPEAN PATENT APPLICATION

(11) **EP 4 560 265 A1**
(43) Date of publication of application: **28.05.2025**
(21) Application number: 23218142.0
(22) Date of filing: 19.12.2023
(51) Int. Cl.: G01C 21/20, G01S 17/931, G06V 20/56

(54) **METHOD AND SYSTEM FOR 3D LOCALIZATION**

(30) Priority: 23.11.2023 EP 23211801
(71) Applicant: Continental Autonomous Mobility Germany GmbH, 85057 Ingolstadt (DE)
(72) Inventor: Seitz, Julien, 85057 Ingolstadt (DE); Natoli, Alice, 88131 Lindau (DE); Luthardt, Stefan, 85057 Ingolstadt (DE)
(74) Representative: Continental Corporation

(57) **Abstract**

The invention relates to a Method for 3D localization of an ego-vehicle in multi-layer scenarios, comprising the following steps:
- Retrieving (S1) an occupancy grid map with different layers;
- Retrieving (S2) an HD map;
- Capturing (S3) the environment of the ego-vehicle with at least one environmental sensor (2) of the ego-vehicle and generating sensor data of the at least one environmental sensor (2);
- Estimating (S4) a pose of the ego-vehicle by means of a state estimator;
- Estimating (S5) a height of the ego-vehicle by means of a height estimator algorithm to generate an estimated 3D position of the ego-vehicle;
- Utilizing (S6) the 3D position to provide a layer of the occupancy grid matching the estimated 3D position of the ego-vehicle.
- Localizing (S7) the ego-vehicle based on the provided layer of the occupancy grid.

## Description

The invention relates to a method and a system for 3D localization of an ego-vehicle in multi-layer scenarios.

### State of the art

Currently, most Localization Solutions for Automated Driving are either 2D solutions (only x and y in a horizontal plane) or 3D solutions (x,y and height z).

2D solutions are not sufficient for driving autonomously in a multi-level car park because the height information is needed to determine where exactly in the car park (on which level) the car is located.

3D solutions on the other hand do cause quite a lot of additional complexity: they need very precise 3D sensorics and calibration, need for precise estimation of the ego vehicle pitch and roll information, need for precise knowledge about the road height profile including banking and superelevation angle as well as the need for additional computation power to process complex 3D sensor information. Especially particle filters that are quite commonly used in the field of ego vehicle localization are heavily depending on the dimensionality of the state space: so the computational effort increases dramatically if one changes from 2D localization (3 degrees of freedom) to 3D localization (6 degrees of freedom).

### Object of the invention

It is therefore an object of the present invention to provide a method and a system which enables a reliable and precise 3D localization of a vehicle in multi-layer scenarios which has a low complexity and a low computational effort.

This object is advantageously solved by the independent claims 1 and 11.

### Description of the invention

First considerations where that navigation indoor in a multi-level garage is a challenging problem for autonomous vehicles and in general robotics. No GNSS signals are available, the closed environment leads to noisy detections for some kind of sensors like radars, to poor light conditions for visual sensors and most importantly the problem becomes 3D, i.e. height, roll and pitch angle needs to be estimated additionally. The problem of localization can be in general solved by using 3D sensors like lidar or 4D imaging radars as well as multicamera systems. In addition, an a priori map of the garage shall be available also in order to identify particular traffic rules, parking permissions and complicated ramps access. Special ARUCO markers may be available (from ISO 23374) for visual detection, their positions are available in the map.

According to the invention a method for 3D localization of an ego-vehicle in multi-layer scenarios is proposed, comprising the following steps:
- Retrieving an occupancy grid map with different layers;
- Retrieving an HD map;
- Capturing the environment of the ego-vehicle with at least one second environmental sensor of the ego-vehicle and generating sensor data of the at least one second environmental sensor;
- Estimating a pose of the ego-vehicle by means of a position state estimator;
- Estimating a height of the ego-vehicle by means of a height estimator algorithm to generate an estimated 3D position of the ego-vehicle;
- Utilizing the 3D position to provide a layer of the occupancy grid matching the estimated 3D position of the ego-vehicle.
- Localizing the ego-vehicle based on the provided layer of the occupancy grid.

The at least one second environmental sensor of the ego-vehicle is preferably a radar sensor. It would also be conceivable to use a camera, multiple radars or a combination of different sensors like multiple cameras and radars.

The multi-layer scenario is e.g. driving in a multi-layer parking lot, underground car park or multi-layer highway intersections.

The occupancy grid map can e.g. be stored in a memory device in the ego-vehice and therefore be prerecorded by test vehicles or the like or could be received via a vehicle-to-x communication module from a backend server. The occupancy grid map is generated e.g. by means of sensor data of sensors of respective test vehicles.

In addition, an HD map, e.g. a 3D HD map or a 2.5D HD map, is available containing road boundaries information, traffic signs and parking lots. It contains height information for all this items. The HD map can also be stored in a memory device in the ego-vehicle or can be received via V2X communication e.g. from a backend server.

With the state estimator the pose of the vehicle in 2D space (x, y, heading) is estimated based on the sensor data of the at least one environmental sensor of the ego-vehicle. The method has been extended via adding a separate height estimator algorithm.

The height in this case describes the vertical position in relation to a reference height.

After estimating the height, we will have an estimated 3D position (x,y and height z) of the vehicle. This information will be used to select the needed part of the layered occupancy grid maps. This can be done for example by selecting map tiles for each height interval.

This method is advantageous because common series radar sensors can be used for indoor 3D localization without any other extra sensors. Radars without elevation information can be used to determine the position in 3D space.

Furthermore, the 2D localization plus height estimator approach is simple and has a very low computational effort compared to a full 3D localization.

By directly incorporating height information from the map data in the correction step of the height estimator a precise and reliable height estimation can be achieved.

In a preferred embodiment the occupancy grid map is generated from a georeferenced lidar point cloud. Each grid map is associated to a different height interval. These occupancy grid maps are the reference maps used for radar localization if the vehicle is within this height interval. To use the lidar point cloud with the sensor data of the radar sensor the point cloud needs to be transformed. The transformation from lidar point cloud to radar occupancy grid is described in the state of the art, e.g. in DE10 2022 202 400.

In a further preferred embodiment the height estimator algorithm uses information from the 3D HD map with height information, a relative pose estimation by means of an odometry module and the pose estimation. The height estimator algorithm takes as inputs the 3D HD map with height information as well as a relative 3D pose estimation (also known as odometry, can be based for example on IMU and wheel odometry data) and the 2D pose from the absolute 2D localization module (e.g., a particle filter) and estimates the height of the vehicle in absolute coordinates.

It is further preferred that the height estimator algorithm is initialized with a known height. This height estimator algorithm needs to be initialized once with a known height. There are multiple ways to provide such initial height: e.g. a dedicated initialization zone with known height that can be detected by environmental sensors or deducing the height from GNSS before entering the garage and/or using other kinds of sensor information potentially in combination with map information.

In a particularly preferred embodiment the heigh estimator algorithm comprises two steps.

It is further preferred that one step is a prediction step and another step is a correction step.

It is also preferred that in the prediction step a relative height change provided by the odometry module is used to update an internal height estimation and increase the internal height uncertainty estimate. The relative 3D pose estimation (odometry) data in the prediction step is mainly necessary to resolve ambiguities (up or down) and bridge potential gaps in the map data (e.g., on a spiral ramp).

Furthermore, in the correction step the uncertainty is reduced by comparing an internal height estimation with a closest road height at a given 2D position of the ego-vehicle. In the correction step the uncertainty is reduced by comparing the internal height estimation with the closest road height at the given 2D position (x,y) from the 2D localization module, assuming that the vehicle stays on the ground the height can be derived directly from the map information.

In a further preferred embodiment the state estimator is a 2D localization algorithm. It is further preferred, that the 2D localization algorithm is a particle filter.

In general, the position state estimator can be a particle filter or a Kalman filter or any other 2D state estimator suitable for absolute landmark based localization.

According to the invention a system for 3D localization of an ego-vehicle in multi-layer scenarios is also provided comprising at least one environmental sensor, a memory device, a communication module, odometry module and a computational unit, wherein the computational unit is designed to execute a method according to an embodiment of the proposed method.

### Description of the figures

Further preferred embodiments are subject matter of the figures. Therein show:
Fig. 1 a schematic flow chart of a method according to an embodiment of the invention;
Fig. 2 a schematic depiction of a system according to an embodiment of the invention;
Fig. 3 a schematic flow chart of a height estimation with a height estimator algorithm.

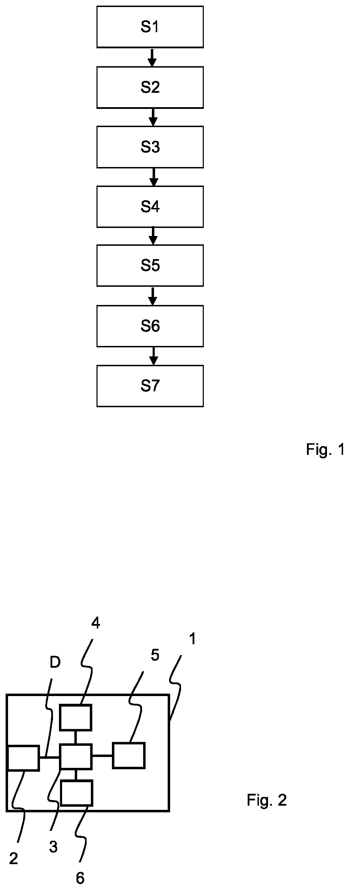

Figure 1 shows a schematic flow chart of a method according to an embodiment of the invention. In a step S1 of the method for 3D localization of an ego-vehicle in multi-layer scenarios an occupancy grid map with different layers based is retrieved. In a step S2 an HD map is retrieved. Steps S1 and S2 can be executed parallel or after one another. In a step S3 the environment of the ego-vehicle is captured with at least one environmental sensor of the ego-vehicle and generating sensor data of the at least one environmental sensor. In step S4 a pose of the ego-vehicle is estimated by means of a state estimator. In a step S5 a height of the ego-vehicle by means of a height estimator is estimated to generate an estimated 3D position of the ego-vehicle. In step S6 the 3D position is utilized to provide a layer of the occupancy grid matching the estimated 3D position of the ego-vehicle. In the final step S7 the ego-vehicle is localized based on the provided layer of the occupancy grid.

Figure 2 shows a schematic depiction of a system according to an embodiment of the invention. The system 1 comprises at least one environmental sensor 2, a memory device 4, a communication module 5, an odometry module 6 and a computational unit 3, wherein the computational unit 3 is designed to execute a method according to an embodiment of the proposed method. The computational unit 3 is hereby connected to the other elements 2, 4, 5 and 6 by means of a data connection D. This data connection D can be wireless or wired. The computational unit 3 can fuse the different data from the environmental sensor 2 and the data received from the odometry module, the memory device 4 and/or the communication module 5 and also is designed to execute the height estimator algorithm.

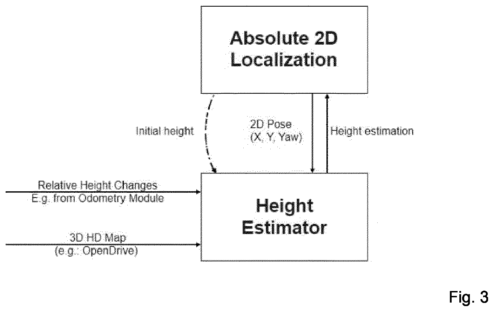

Figure 3 shows a schematic flow chart of a height estimation with a height estimator algorithm. Herein, the height estimator algorithm gets data inputs comprising a 3D HD Map, e.g. from a memory device, and information about relative height changes, e.g. from an odometry module of the ego-vehicle. Additionally, the height estimator receives the 2D pose of the vehicle. In a first execution of the algorithm, the height estimator is initialized with an initial height, which for example can be deduced from the 2D pose in combination with map information. With the received data and information, the height estimator can estimate a height of the ego-vehicle with respect to an initial height which could be a height of zero before the ego-vehicle enters e.g. a multi-layer parking lot. The estimated height can then be fused with an absolute 2D localization of the ego-vehicle to get a 3D localization of the ego-vehicle.

### List of reference numerals

- 1: system
- 2: environmental sensor
- 3: computational unit
- 4: memory device
- 5: communication module
- 6: odometry module
- D: data connection
- S1-S7: method steps

## Claims

1. Method for 3D localization of an ego-vehicle in multi-layer scenarios, comprising the following steps:
- Retrieving (S1) an occupancy grid map with different layers;
- Retrieving (S2) an HD map;
- Capturing (S3) the environment of the ego-vehicle with at least one environmental sensor (2) of the ego-vehicle and generating sensor data of the at least one environmental sensor (2);
- Estimating (S4) a pose of the ego-vehicle by means of a state estimator;
- Estimating (S5) a height of the ego-vehicle by means of a height estimator algorithm to generate an estimated 3D position of the ego-vehicle;
- Utilizing (S6) the 3D position to provide a layer of the occupancy grid matching the estimated 3D position of the ego-vehicle.
- Localizing (S7) the ego-vehicle based on the provided layer of the occupancy grid.

2. Method according to claim 1,
**characterized in that**,
the occupancy grid map is generated from a georeferenced lidar point cloud.

3. Method according to claim 1,
**characterized in that**,
the height estimator algorithm uses information from the 3D HD map with height information, a relative pose estimation by means of an odometry module (6) and the pose estimation.

4. Method according to any of the preceding claims,
**characterized in that**,
the height estimator algorithm is initialized with a known height.

5. Method according to any of the preceding claims,
**characterized in that**,
the heigh estimator algorithm comprises two steps.

6. Method according to claim 5,
**characterized in that**,
one step is a prediction step, and another step is a correction step.

7. Method according to claim 6,
**characterized in that**,
in the prediction step a relative height change provided by the odometry module (6) is used to update an internal height estimation and increase the internal height uncertainty estimate.

8. Method according to claim 6,
**characterized in that**,
in the correction step the uncertainty is reduced by comparing an internal height estimation with a closest road height at a given 2D position of the ego-vehicle.

9. Method according to claim 1,
**characterized in that**
the state estimator is a 2D localization algorithm.

10. Method according to claim 9,
**characterized in that**
the 2D localization algorithm is a particle filter.

11. System (1) for 3D localization of an ego-vehicle in multi-layer scenarios comprising at least one environmental sensor (2), a memory device (4), a communication module (5), an odometry module (6) and a computational unit (3), wherein the computational unit (3) is designed to execute a method according to any of the claims 1 to 8.
